# EUROPEAN PATENT SPECIFICATION

(11) **EP 2 327 471 B1**
(45) Date of publication and mention of the grant of the patent: **29.05.2013**
(21) Application number: 10192527.9
(22) Date of filing: 25.11.2010
(51) Int. Cl.: B01F 3/04, B01F 3/20, C02F 3/12, C02F 3/16, C02F 3/22

(54) **A reactor for aerobic treatment of fluids and process for aerobic treatment of a fluid to be treated**
Reaktor zur aeroben Behandlung von Flüssigkeiten und Verfahren zur aeroben Behandlung einer zu behandelnden Flüssigkeit
Réacteur pour traitement aérobie de fluides et procédé de traitement aérobie d'un fluide à traiter

(30) Priority: 26.11.2009 ES 200931076
(43) Date of publication of application: 01.06.2011
(73) Proprietor: Edarma, s.l., 08224 Terrassa (ES)
(72) Inventor: Boulant, Alain, 08224, Terrassa (ES); Ilari Castells, Albert, 08224, Terrassa (ES)
(74) Representative: Oficina Ponti, SLP

(56) References cited:
- EP-A1- 1 379 325
- US-A- 4 045 336

## Description

The present invention refers to a reactor for aerobic treatment of fluids and a process for aerobic treatment of a fluid needing to be treated.

### BACKGROUND OF THE INVENTION

Reactors of the type where a fluid descends or passes through a "U" tube for aerobic treatment of fluids are technologically known. They include a treatment tank in which aeration of the fluid takes place to facilitate the incorporation of atmospheric oxygen and therefore the aerobic digestion of the fluid.

Such reactors are very useful for treating effluents with a high content of soluble organic matter.

Patents EP1379325 and EP1379472 describe two reactors for aerobic fluid treatment that include a large funnel in the upper part of the tank to collect fluid from the surface of the tank by overflow. At the base of the funnel is a conduit, reaching to the bottom of the tank, inside of which is an impeller generating a descending fluid flow (basic characteristic of descending or "U" fluid reactors).

In these reactors, the aspiration of fluid driven by the impeller inside the centre of the funnel allows air bubbles to be dragged in and so results in aeration of the fluid.

Once air bubbles are captured, they are dragged to the bottom of the tank by the impeller allowing, according to Henry's law, additional solubilisation of new air in the heart of the fluid due to the increase in pressure of the gas caused by the pressure of the column of fluid. In this way, the fluid receives the soluble oxygen necessary to allow the growth of aerobic biomass that digests the organic material.

However, it has been observed that the reactors described in the above mentioned patents have certain limitations when treating effluents with a very high fat and/or organic matter content such as in the case of, for example, purine originating from animal farms.

Specifically, it has been observed that the rate of atmospheric oxygen capture of the fluid is very limited, which results in a limitation of the treatment capacity of the reactor and, in extreme cases, the appearance of fermentation processes that give rise to bad odours.

### DESCRIPTION OF THE INVENTION

A first objective of the present invention is to resolve the above mentioned drawbacks, developing a reactor for aerobic fluid treatment that has the advantage of enabling a better and higher rate of capture of atmospheric oxygen, and therefore, a higher capacity for fluid treatment.

A second objective of the present invention is that of resolving the abovementioned drawbacks, developing a process for aerobic treatment of a fluid to be treated that obtains a very high purification yield in complex fluids, such as in the case of residues from animal waste, residues of fats and industrial residues with high organic content.

In accordance with these objectives, according to a first aspect, the present invention provides a reactor for aerobic fluid treatment as claimed in claim 1.

According to a second aspect, a process is provided for aerobic treatment of the fluid to be treated as claimed in claim 8.

In the reactor and process of the present invention, the fluid from the bottom of the tank is divided at the surface into two fractions: a first fraction of fluid that spills directly into a central collector via a cascade for the capture of new air bubbles; and a second fraction that spills to the central collector via a plurality of lateral collectors for surface agitation (degasification) of the fluid before reaching the central collector.

In the central collector, the fluid cascade forms over the aspiration zone of the conduit, so that the efficiency of capture of air bubbles of the reactor is very high. Once air bubbles are captured, they are dragged to the bottom of the tank by means of aspiration allowing, according to Henry's law, additional incorporation (solubilisation) of new air into the heart of the fluid due to the increase in partial pressure of the bubbles of gas by the pressure of the fluid column.

In the lateral collectors, mechanical surface agitation is carried out on an important fraction of total fluid that reaches the central collector. This agitation enables prior degasification (elimination of already used dissolved gases) of the fluid, and therefore significantly improves the solubilisation capacity for new air of the fluid that reaches the central collector. In addition, carrying out agitation on the surface causes the percentage of dissolved gases of the degasified fluid to be reduced to values corresponding to those of the solubility at atmospheric pressure, so that the proportion of new air that can be incorporated into the fluid to be conducted to the bottom of the tank is much increased.

In summary, it has been observed that owing to the presence of the abovementioned lateral collectors, in contrast to what occurs in the reactors of the current state of the art, the already-used gases enriched with carbon dioxide from the respiration of the biomass are removed from the fluid in the reactor of the present invention. In this way, the rate of capture of new air (rich in oxygen) of the fluid that enters the central collector is much higher, so the global purification yield of the reactor is much higher.

Said reactor preferably comprises a deflector, mounted to be vertically movable with respect to the upper edge of said central collector, to regulate the flow of the first fraction of fluid that spills into said collector. In this way it is possible to regulate the dimensions of the fluid cascade that results in the capture of air bubbles and ultimately, the regulation of air entering the system.

According to a preferred embodiment of the reactor and process, said means of interfering the fluid flow comprise the upper edges of said collectors configured with a plurality of notches to force the division of the incoming fluid flow and induce the formation of turbulence.

The division of incoming fluid flow causes a first agitation of the fluid at atmospheric pressure that encourages the formation of turbulence and as a result a first degasification of the fluid at atmospheric pressure.

Preferably, according to said preferred embodiment, said means of interfering the fluid flow comprise at least an internal channel connected in cascade with the upper edge of each collector, with the fluid spilling to the bottom of each collector via said channel by inducing the formation of turbulence.

Said means of interfering the fluid flow additionally comprise a second internal channel connected in cascade with the first internal channel, with the fluid spilling to the bottom of the collector via said first and second internal channels by inducing the formation of turbulence.

The collision of the fluid against these internal channels and the projections on the profiles of the internal channels cause sudden changes in direction in the circulating fluid coming from the edge of the collector that result in strong turbulence, encouraging additional degasification of the fluid at atmospheric pressure.

According to a preferred embodiment of the reactor, the bottom of said lateral collectors is attached to the bottom of said central collector, allowing the levels of fluid inside said lateral collectors and said central collector to be the same.

This configuration has the advantage that it facilitates both the construction and the management of the reactor because of the existence of a single fluid level in the interior of all the collectors.

Advantageously, the bottom of each lateral collector is configured with a slope towards the bottom of the central collector.

The means of aspiration and impulsion to generate a descending flow of fluid preferably comprise a downward impeller located inside the section of the central conduit that includes the entry of fluid.

As previously mentioned, according to a second aspect of the present invention, it provides a process for aerobic treatment of a fluid to be treated that obtains high yields in fluids with a high content of organic and fat material.

The term fluid with a high organic content is understood to mean a fluid with residues derived from animal waste (for example, purine), agro-food industry, septic tanks or organic sludge.

The process claimed is based on a prior stage of agitation at atmospheric pressure of an important proportion of the fluid coming from the bottom of the tank.

Said mechanical surface agitation of the second fraction of fluid reaching the central collector is preferably carried out to reduce the concentration of dissolved gases in said fluid to values corresponding to those of the solubility of such gases at atmospheric pressure.

As stated above, in this way and in accordance with Henry's law, the proportion of new air (rich in oxygen) that can dissolve in the fluid when conducted to the bottom of the tank is very high.

### BRIEF DESCRIPTION OF THE DRAWINGS

For a better understanding of the description above, some figures are included in which a non-limiting example of a practical case of embodiment is schematically represented.

In these figures,
figure 1 is a plan view of a preferred embodiment of the reactor of the present invention,
figure 2 shows a longitudinal section along the line II-II of the reactor of figure 1,
figure 3 shows a schematic perspective view of the reactor of figure 1,
figure 4 shows a schematic perspective view of the lateral collector of the reactor of figure 1,
figure 5 shows a schematic view of a cross section of the collector of figure 4 in which the route of flow entering the collector is represented,
figure 6 shows a schematic plan view of the edge of the collector of figure 4 in which the formation of turbulence at the notches of the edge is represented.

### DESCRIPTION OF A PREFERRED EMBODIMENT

A preferred embodiment of the reactor 1 of the present invention is described below. It includes a tank 2 that has a central collector 3 at the top, with a circular base, and three lateral collectors 4, with a rectangular base, which are connected to said central collector 3.

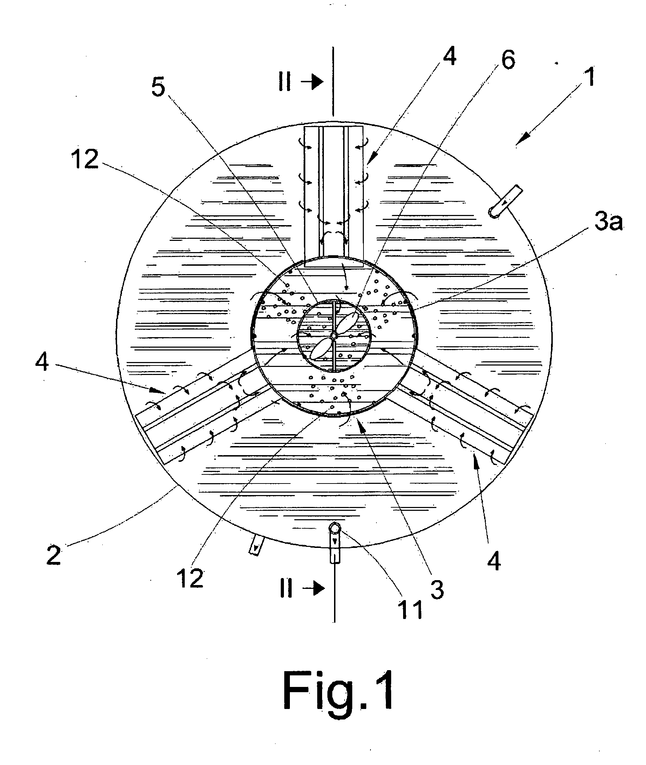

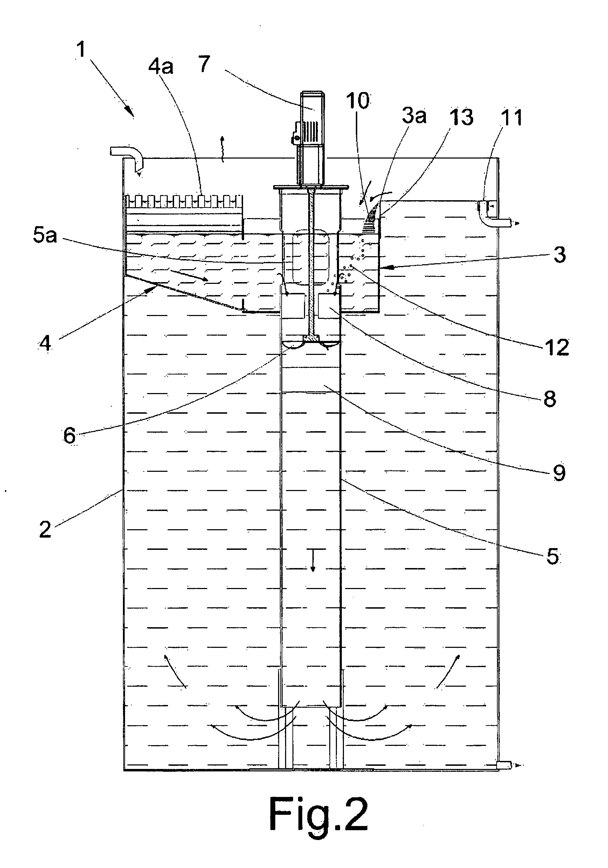

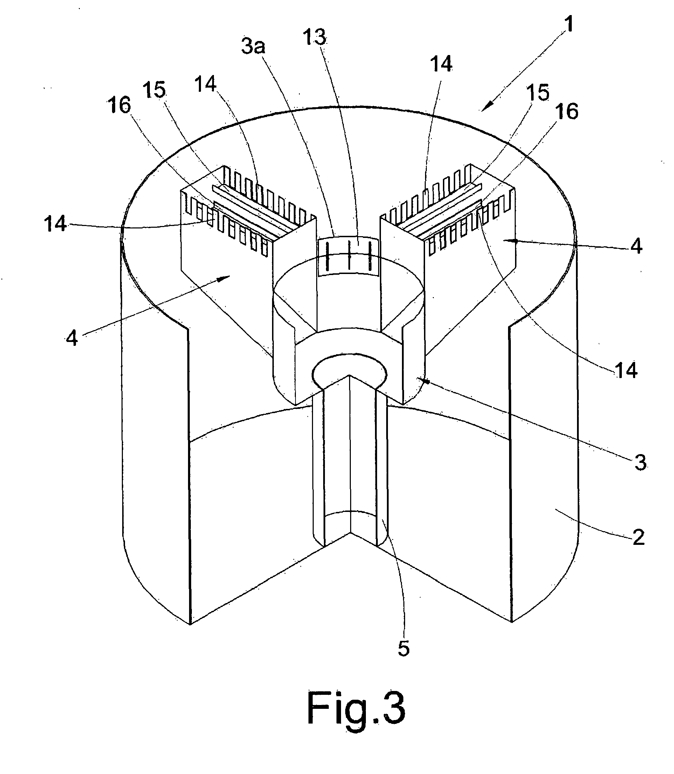

As figures 1 to 3 show, the base of the central collector 3 is attached to a central conduit 5 that extends vertically from the top of the tank 2 to the bottom.

The section of the conduit 5 that includes the entry 5a of the fluid from the central collector 3 has an impeller 6 inside for creating a descending flow of fluid inside said conduit 5.

In the embodiment described, said impeller 6 is operated by a motor 7 located outside the tank 2. Above the impeller 6, an anti-vortex element 8 is located to encourage the aspiration of the fluid and preventing rotation of the fluid body. Also, below the impeller 6 is another anti-vortex element 9 located to encourage impulsion in axial flow, avoiding rotation of the fluid mass.

As figure 1 shows, the fluid from the bottom of the tank 2 is divided on the surface into two fractions: a first fraction of fluid, that spills directly into the central collector 3 via segments of its upper edge 3a and a second fraction of fluid that spills to the same central collector 3 via the upper edge 4a of the lateral collectors 4.

The spilling of the first fraction of fluid across the upper edge 3a of the central collector is carried out by the formation of a cascade 10 owing to the presence of an overflow 11 that regulates the level of the fluid in the tank 2, adjusting it to the required height over said upper edge 3a.

The cascade 10 that forms on the upper edge 3a of the central collector 3 enables the capture of new air bubbles 12 just above the aspiration zone of the impeller 6, so that the capture of new air 12 in the central collector 3 is very efficient.

In the embodiment described, the upper edge 3a includes a deflector 13 that can be vertically displaced to regulate the flow of the first fraction of fluid that spills directly into the collector 3. In this way, it is possible to regulate the size of the cascade 10 of fluid and, ultimately, the entry flow of new air 12 to the reactor 1.

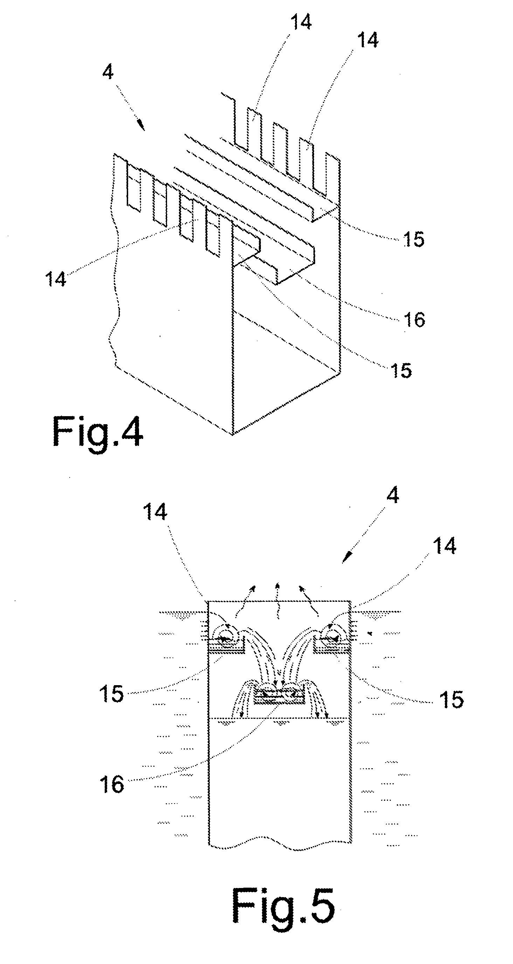

The second fraction of fluid from the bottom of the tank 2 spills into the central collector 3 via the upper edges 4a of lateral collectors 4. These are fitted with the means of interfering the fluid flow that falls inside with the aim of mechanically agitating the fluid of the surface before it arrives in the central collector 3. Figure 4 shows a perspective view of one of said lateral collectors 4.

As aforementioned in the description of the invention, the surface agitation of the fluid enables degasification or removal to atmospheric pressure of dissolved gases (preferably carbon dioxide from the respiration of the aerobic biomass) of the fluid coming from the bottom of the tank 2. In this way, the rate of capture of new air 12 (rich in oxygen) of the fluid entering the central collector 3 is much higher, so the global purification yield of the reactor 1 is much higher.

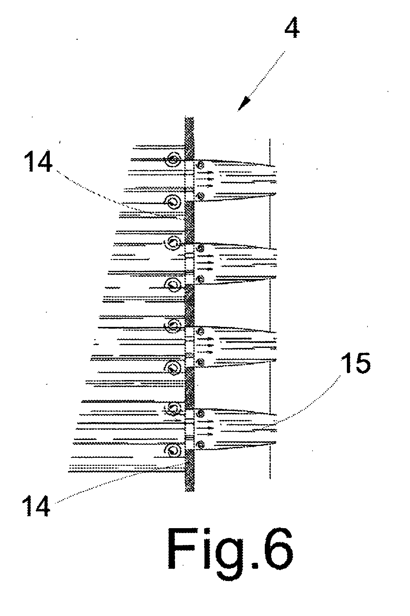

In the embodiment described, to interfere the flow of fluid entering the lateral collectors 4, firstly, the upper edge 4a of said collectors is configured with a plurality of notches 14 to force the division of the entry flow and cause a first formation of turbulence that encourages degasification to atmospheric pressure. Figure 6 shows the turbulence formed at the notches 14 of the upper edge 4a of one of said collectors 4 when the liquid mass is sectioned into multiple flows.

In order to continue with the degasification, the lateral collectors 4 include a pair of lateral channels 15 inside them connected in cascade with the upper edges 4a of the collector 4, and a third central channel 16 connected in cascade with the two lateral channels 15. In this way, the flow entering the collectors 4 spills to the bottom of said collectors 4 through said internal channels 15 and 16 with the consequent formation of turbulence.

As shown in figure 5, the collision of fluid against the internal channels 15 and 16, as well as the sudden change in direction of the fluid due to the presence of the projections of said channels, results in strong agitation of the fluid to atmospheric pressure, which causes the degasification of the fluid before its arrival at the central collector 3.

The process of fluid treatment that the reactor employs is described below.

The impeller 6 located inside the conduit 5 generates a descending flow of fluid of high flow rate and low pressure, which sucks down large new air bubbles 12 that were captured by the formation of the cascade 10 at the edge 3a of the central collector 3. The agitation and the rotation of the impeller breaks up the large air bubbles 12 into fine air bubbles, thereby increasing the surface area of contact between the liquid and the gas 12, improving the gas/liquid transfer index.

The pumping flow of the impeller 6 is calculated to achieve a rapid integral mixing in the reactor 1, the diameter of the conduit 5 being adequate to achieve a significant descending flow rate in order to drag the air bubbles 12 to the bottom of the tank 2.

As stated above, the incorporation (solubilisation) of new air 12 in the heart of the fluid increases, according to Henry's law, with the increase in the partial pressure of the gas bubbles with the pressure of the fluid column, as the fluid is conducted to the bottom of the tank 2.

At the bottom of the tank, forced contact occurs between the biomass in suspension and the already dissolved new air 12 that enables the growth of the aerobic biomass and the digestion of the organic material. During the digestion, the dissolved oxygen is consumed, leaving the fluid enriched with carbon dioxide from the respiration of the biomass.

At the top part of the tank 2, the emerging fluid, depleted of oxygen and saturated with "used" gases from the digestion, has been observed to have a very low rate of oxygen capture.

The process of the present invention significantly improves the rate of oxygen capture of the fluid coming from the bottom of the tank 2 owing to the presence of the lateral collectors 4, in which the removal to atmospheric pressure of the "used" gas (degasification) of an important proportion of the fluid takes place before it reaches the central collector 3.

In order to remove the "used" gas, as aforementioned, these collectors are fitted with means of interfering the flow of fluid inside them. Said means allow the formation of turbulence (mechanical surface agitation), so that the concentration of dissolved gases in the fluid is reduced to values corresponding to those of their solubility at atmospheric pressure. Owing to this effect, the proportion of new air (rich in oxygen) that can be dissolved in the heart of the fluid is very high. This fluid is then conducted to the bottom of the tank 2.

In the process of the present invention, the fraction of fluid that spills into the central collector 3 over the upper edge 4a of the lateral collectors 4 is very much higher than the fraction of fluid that spills directly into the central collector 3 over its upper edge 3a. Therefore, it can be said that the fluid that is aspirated from the central collector 3 is a fluid that is substantially free of "used" gas with a higher capacity for dissolving new gases.

As previously mentioned, the level of fluid in the tank 2 is regulated with an overflow 11 to ensure that the fraction of fluid that spills directly into the central collector 3 does so by the formation of a cascade 10 that enables the capture of air bubbles 12 just over the zone of aspiration of the conduit 5. Owing to this, in contrast to reactors of the current state of the art, the efficiency of dragging new air 12 from the central collector is very high.

In the central collector 3, this new air 12 dragged from the surface mixes with a fluid that is substantially free of "used" gases so it can accommodate a high proportion of new gases when it is sucked to the bottom of the tank. This guarantees a high rate of oxygen capture in complex fluids with high organic content such as, for example, residues from farm waste or the agro-food industry.

Despite the description above and the illustration of a specific embodiment of the present invention, it is evident that an expert in the field could introduce variants and modifications or substitute some details for other technically equivalent details, without departing from the scope of protection defined by the claims attached.

For example, although reference has been made in the present report to a reactor 1 that has three lateral collectors 4, the number of lateral collectors 4 connected to the central collector 3 can vary depending on the type of fluid to be treated. Similarly, it would also be possible to design a reactor 1 that includes in the same tank 2 a number of central collectors 3, each of which with their respective lateral collectors 4, with the control of the spilling of fluid across the upper edge of all the central collectors 3 being controlled by a single overflow 11 for regulation of the fluid level in the tank 2. Also, although the preferred embodiment describes a reactor 1 with a tank 2 of circular base, the shape of the tank 2 is not limited, and it could have regular rectangular shape or with its smaller sides in the form of semicircles.

## Claims

1. Reactor (1) for aerobic fluid treatment comprising a tank (2) that contains the fluid to be treated and a central conduit (5) that extends vertically from the top of the tank (2) to the bottom, with the conduit (5) including means of aspiration and impulsion (6, 7) to generate a descending flow of fluid inside it, the entry (5a) of fluid to said conduit (5) being arranged in association with a central collector (3) of fluid from the surface of said tank (2), **characterised in that** it includes a plurality of lateral collectors (4) connected to said central collector (3), said plurality of lateral collectors (4) being arranged such that the fluid from the bottom of the tank (2) is divided at the surface into two fractions;
- a first of said fractions of fluid from the surface of the tank (2) spilling over the upper edge (3a) of said central collector (3), with the level of the fluid in the tank (2) being regulated in such as way that said first fraction spills to the central collector (3) by means of the formation of a cascade (10), and
- a second of said fractions of fluid from the surface of the tank (2) spilling over the upper edge (4a) of said lateral collectors (4), each of said lateral collectors (4) including means (14, 15, 16) of interfering the flow of fluid falling into them, with these means (14, 15, 16) causing mechanical surface agitation of said second fraction of fluid before it reaches the central collector (3).

2. Reactor (1) according to claim 1, that comprises a deflector (13), mounted to be vertically movable with respect to the upper edge (3a) of said central collector (3), to regulate the flow of the first fraction of fluid that spills into said central collector (3).

3. Reactor (1) according to claim 1, wherein said means of interfering the fluid flow comprise the upper edges (4a) of said lateral collectors (4) configured with a plurality of notches (14) to force the division of the incoming fluid flow and induce the formation of turbulence.

4. Reactor (1) according to any of claims 1 to 3, wherein said means of interfering the fluid flow comprise at least one internal channel (15) connected in cascade with the upper edge (4a) of each lateral collector (4), with the fluid spilling to the bottom of each lateral collector (4) via said channel (15) by inducing the formation of turbulence.

5. Reactor (1) according to claim 4, wherein said means of interfering the fluid flow additionally comprise a second internal channel (16) connected in cascade with the first internal channel (15), with the fluid spilling to the bottom of the lateral collector (4) via said first and second internal channels (15, 16) by inducing the formation of turbulence.

6. Reactor (1) according to claim 1, wherein the bottom of said lateral collectors (4) is attached to the bottom of said central collector (3), allowing the levels of fluid inside said lateral collectors (4) and said central collector (3) to be the same.

7. Reactor (1) according to any of the previous claims, wherein said means of generating a descending flow of fluid comprise a downward impeller (6) located inside the section of the central conduit (5) that includes the entry (5a) of fluid.

8. Process for aerobic treatment of a fluid with the reactor (1) according to any of the claims 1 to 7, that includes the generation of descending fluid flow inside a central conduit (5) that extends vertically from the top of the tank (2) to the bottom, **characterised by** the fact that it comprises the steps of dividing the fluid coming from the bottom of the tank (2) into two fractions, and the steps of:
i) directly feeding a first of said fractions of fluid from the surface of the tank (2) to a central collector (3) arranged in association with the entry (5a) of this conduit (5), this feeding being carried out by means of the formation of a cascade (10) over the upper edge (3a) of said collector (3) for the purpose of capturing air bubbles (12),
ii) feeding a second of said fractions of fluid from the surface of the tank (2) to the same central collector (3), this feeding being carried out from the upper edge (4a) of a plurality of lateral collectors (4) that connect to said central collector (3), each of said collectors (4) including means (14, 15, 16) of interfering the flow of fluid falling inside them, with these means causing mechanical surface agitation of said second fraction of fluid for its degasification before its arrival at the central collector (3), and
iii) aspiration and impulsion of said first and second fractions of fluid to the bottom of the tank (2), said aspiration allowing the incorporation of atmospheric air in the heart of said fluid.

9. Process according to claim 8,wherein in stage ii) said means of interfering the fluid flow spilling inside said lateral collectors (4) include the upper edges (4a) of said lateral collectors (4) configured with a plurality of notches (14) to force the division of the incoming fluid flow and induce the formation of turbulence.

10. Process according to any of the claims 8 to 9, wherein in stage ii) said means of interfering the fluid flow comprise at least one internal channel (15) connected in cascade with the upper edge (4a) of each lateral collector (4), with the fluid spilling to the bottom of each lateral collector (4) via said channel (15) by inducing the formation of turbulence.

11. Process according to claim 10, wherein in stage ii) said means of interfering the fluid flow additionally comprise a second internal channel (16) connected in cascade with the first internal channel (15), with the fluid spilling to the bottom of the lateral collector (4) via said first and second internal channels (15, 16) by inducing the formation of turbulence.

12. Process according to any of the claims 8 to 11, wherein said fluids to be treated are residues with high organic content.

## Patentansprüche

1. Reaktor (1) zur aeroben Fluidbehandlung, aufweisend einen Behälter (2), der das zu behandelnde Fluid enthält, und ein zentrales Rohr (5), das sich vertikal vom oberen Ende des Behälters (2) zum unteren Ende erstreckt, wobei das Rohr (5) Mittel zum Ansaugen und Antreiben (6, 7) umfasst, um eine abfallende Fluidströmung darin zu erzeugen, und wobei der Einlass (5a) für das Fluid in das Rohr (5) zusammen mit einem zentralen Kollektor (3) für das Fluid von der Oberseite des Behälters (2) angeordnet ist, **dadurch gekennzeichnet, dass** er eine Vielzahl von seitlichen Kollektoren (4) umfasst, die mit dem zentralen Kollektor (3) verbunden sind, wobei die Vielzahl von seitlichen Kollektoren (4) derart angeordnet ist, dass das Fluid von dem unteren Ende des Behälters (2) an der Oberseite in zwei Fraktionen geteilt wird,
- wobei eine erste der Fluidfraktionen von der Oberseite des Behälters (2) über den oberen Rand (3a) des zentralen Kollektors (3) schwappt, und die Füllhöhe des Fluids in dem Behälter (2) derart reguliert wird, dass die erste Fraktion in den zentralen Kollektor (3) durch die Bildung einer Kaskade (10) schwappt, und
- wobei eine zweite der Fluidfraktionen von der Oberseite des Behälters (2) über den oberen Rand (4a) der seitlichen Kollektoren (4) schwappt, jeder der seitlichen Kollektoren (4) Mittel (14, 15, 16) zur Beeinflussung der Strömung des Fluids, welches in diesen fällt, umfasst, und diese Mittel (14, 15, 16) eine mechanische Agitation der Oberfläche der zweiten Fraktion bewirken, bevor diese in den zentralen Kollektor (3) gelangt.

2. Reaktor (1) nach Anspruch 1, aufweisend einen Deflektor (13), der bezüglich des oberen Rands (3a) des zentralen Kollektors (3) vertikal beweglich angebracht ist, um die Strömung der ersten Fluidfraktion, die in den zentralen Kollektor (3) schwappt, zu regulieren.

3. Reaktor (1) nach Anspruch 1, wobei bei den Mitteln zur Beeinflussung der Fluidströmung die oberen Ränder (4a) der seitlichen Kollektoren (4) mit einer Mehrzahl von Ausnehmungen (14) gebildet sind, um die Teilung der ankommenden Fluidströmung zu erzwingen und die Bildung von Verwirbelungen herbeizuführen.

4. Reaktor (1) nach einem der Ansprüche 1 bis 3, wobei die Mittel zur Beeinflussung der Fluidströmung wenigstens einen inneren Kanal (15) umfassen, der mit dem oberen Rand (4a) eines jeden seitlichen Kollektors (4) in Kaskade verbunden ist, wobei das Fluid auf den Boden eines jeden seitlichen Kollektors (4) über den Kanal (15) durch das Herbeiführen von Verwirbelungen schwappt.

5. Reaktor (1) nach Anspruch 4, bei dem die Mittel zur Beeinflussung der Fluidströmung zusätzlich einen zweiten inneren Kanal (16) aufweisen, der mit dem ersten inneren Kanal (15) in Kaskade verbunden ist, wobei das Fluid auf den Boden des seitlichen Kollektors (4) über den ersten und den zweiten inneren Kanal (15, 16) durch das Herbeiführen von Verwirbelungen schwappt.

6. Reaktor (1) nach Anspruch 1, bei dem der Boden des seitlichen Kollektors (4) an dem Boden des zentralen Kollektors (3) angebracht ist, so dass die Füllhöhen des Fluids in den seitlichen Kollektoren (4) und in dem zentralen Kollektor (3) gleich sind.

7. Reaktor (1) nach einem der vorhergehenden Ansprüche, bei dem die Mittel zur Erzeugung einer abfallenden Fluidströmung ein nach unten gerichtetes Laufrad (6) umfassen, das in dem Abschnitt des zentralen Rohres (5), der den Einlass (5a) für das Fluid aufweist, angeordnet ist.

8. Verfahren zur aeroben Behandlung eines Fluids mit dem Reaktor (1) gemäß einem der Ansprüche 1 bis 7, welches die Erzeugung einer abfallenden Fluidströmung in einem zentralen Rohr (5), das sich vertikal vom oberen Ende des Behälters (2) zum unteren Ende erstreckt, umfasst, **dadurch gekennzeichnet, dass** es den Schritt des Teilens des Fluids, welches von dem unteren Ende des Behälters (2) ankommt, in zwei Fraktionen sowie die folgenden Schritte umfasst:
i) direktes Zuführen einer ersten Fluidfraktion von der Oberseite des Behälters (2) einem zentralen Kollektor (3), der zusammen mit dem Einlass (5a) des Rohres (5) angeordnet ist, wobei dieses Zuführen durch die Bildung einer Kaskade (10) über dem oberen Rand (3a) des Kollektors (3) zum Zwecke des Einfangens von Luftblasen (12) erfolgt,
ii) Zuführen einer zweiten der Fluidfraktionen von der Oberseite des Behälters (2) zu demselben zentralen Kollektor (3), wobei dieses Zuführen von dem oberen Rand (4a) einer Vielzahl von seitlichen Kollektoren (4), die mit dem zentralen Kollektor (3) verbunden sind, erfolgt, wobei jeder der Kollektoren (4) Mittel (14, 15, 16) zur Beeinflussung der darin abfallenden Fluidströmung umfasst, und wobei diese Mittel eine mechanische Oberflächenagitation der zweiten Fluidfraktion zu deren Entgasung, bevor sie in den zentralen Kollektor (3) gelangt, bewirken, und
iii) Ansaugen und Antreiben der ersten und der zweiten Fluidfraktion zum unteren Ende des Behälters (2), wobei das Ansaugen die Beimischung von atmosphärischer Luft mitten in das Fluid ermöglicht.

9. Verfahren nach Anspruch 8, bei dem in Schritt ii) die Mittel zur Beeinflussung der Fluidströmung, die in die seitlichen Kollektoren (4) schwappt, die oberen Ränder (4a) der seitlichen Kollektoren (4) umfassen, die mit einer Vielzahl von Ausnehmungen (14) gebildet sind, um die Teilung der ankommenden Fluidströmung zu erzwingen und die Verwirbelungen herbeizuführen.

10. Verfahren nach einem der Ansprüche 8 bis 9, bei dem in Schritt ii) die Mittel zur Beeinflussung der Fluidströmung wenigstens einen inneren Kanal (15) umfassen, der in Kaskade mit dem oberen Rand (4a) eines jeden seitlichen Kollektors (4) verbunden ist, wobei das Fluid auf den Boden eines jeden seitlichen Kollektors (4) über den Kanal (15) durch das Herbeiführen von Verwirbelungen schwappt.

11. Verfahren nach Anspruch 10, bei dem in Schritt ii) die Mittel zur Beeinflussung der Fluidströmung zusätzlich einen zweiten inneren Kanal (16) aufweisen, der in Kaskade mit dem ersten inneren Kanal (15) angeordnet ist, wobei das Fluid auf den Boden des seitlichen Kollektors (4) über den ersten und den zweiten inneren Kanal (15, 16) durch das Herbeiführen von Verwirbelungen schwappt.

12. Verfahren nach einem der Ansprüche 8 bis 11, wobei es sich bei den zu behandelnden Fluiden um Rückstände mit einem hohen organischen Anteil handelt.

## Revendications

1. Réacteur (1) pour le traitement aérobie d'un fluide comprenant un réservoir (2) qui contient le fluide à traiter et une conduite centrale (5) qui s'étend verticalement du dessus du réservoir (2) jusqu'en bas, la conduite (5) incluant des moyens d'aspiration et d'impulsion (6, 7) pour produire un écoulement descendant de fluide à l'intérieur de celle-ci, l'entrée (5a) de fluide dans ladite conduite (5) étant agencée en association avec un collecteur central (3) de fluide depuis la surface dudit réservoir (2), **caractérisé en ce qu'**il inclut une pluralité de collecteurs latéraux (4) raccordés audit collecteur central (3), ladite pluralité de collecteurs latéraux (4) étant agencée de sorte que le fluide venant du bas du réservoir (2) soit divisé à la surface en deux fractions :
- une première desdites fractions de fluide à la surface du réservoir (2) se déversant par-dessus le bord supérieur (3a) dudit collecteur central (3), le niveau du fluide dans le réservoir (2) étant régulé de sorte que ladite première fraction se déverse dans le collecteur central (3) par la formation d'une cascade (10), et
- une seconde desdites fractions de fluide à la surface du réservoir (2) se déversant par-dessus le bord supérieur (4a) desdits collecteurs latéraux (4), chacun desdits collecteurs latéraux (4) incluant des moyens (14, 15, 16) pour agir sur l'écoulement de fluide tombant à l'intérieur de ceux-ci, ces moyens (14, 15, 16) provoquant une agitation mécanique de la surface de ladite seconde fraction de fluide avant qu'elle atteigne le collecteur central (3).

2. Réacteur (1) selon la revendication 1, qui comprend un déflecteur (13), monté pour être mobile verticalement par rapport au bord supérieur (3a) dudit collecteur central (3), afin de réguler l'écoulement de la première fraction de fluide qui se déverse dans ledit collecteur central (3).

3. Réacteur (1) selon la revendication 1, dans lequel lesdits moyens pour agir sur l'écoulement de fluide comprennent les bords supérieurs (4a) desdits collecteurs latéraux (4) configurés avec une pluralité d'encoches (14) pour forcer la division de l'écoulement de fluide entrant et provoquer la formation de turbulences.

4. Réacteur (1) selon l'une quelconque des revendications 1 à 3, dans lequel lesdits moyens pour agir sur l'écoulement de fluide comprennent au moins un canal interne (15) raccordé en cascade avec le bord supérieur (4a) de chaque collecteur latéral (4), le fluide se déversant en bas de chaque collecteur latéral (4) via ledit canal (15) en provoquant la formation de turbulences.

5. Réacteur (1) selon la revendication 4, dans lequel lesdits moyens pour agir sur l'écoulement de fluide comprennent en outre un second canal interne (16) raccordé en cascade avec le premier canal interne (15), le fluide se déversant en bas du collecteur latéral (4) via lesdits premier et second canaux internes (15, 16) en provoquant la formation de turbulences.

6. Réacteur (1) selon la revendication 1, dans lequel le bas desdits collecteurs latéraux (4) est fixé au bas dudit collecteur central (3), ce qui permet aux niveaux de fluide à l'intérieur desdits collecteurs latéraux (4) et dudit collecteur central (3) d'être identiques.

7. Réacteur (1) selon l'une quelconque des revendications précédentes, dans lequel lesdits moyens pour produire un écoulement descendant de fluide comprennent une hélice orientée vers le bas (6) située à l'intérieur de la section de la conduite centrale (5) qui inclut l'entrée (5a) de fluide.

8. Procédé de traitement aérobie d'un fluide avec le réacteur (1) selon l'une quelconque des revendications 1 à 7 qui inclut la production d'un écoulement de fluide descendant à l'intérieur d'une conduite centrale (5) qui s'étend verticalement du dessus du réservoir (2) jusqu'en bas, **caractérisé en ce qu'**il comprend les étapes consistant à diviser le fluide venant du bas du réservoir (2) en deux fractions et les étapes consistant à:
i) acheminer directement une première desdites fractions de fluide de la surface du réservoir (2) jusqu'à un collecteur central (3) agencé en association avec l'entrée (5a) de cette conduite (5), cet acheminement étant réalisé par la formation d'une cascade (10) sur le bord supérieur (3a) dudit collecteur (3) en vue de capturer des bulles d'air (12),
ii) acheminer une seconde desdites fractions de fluide de la surface du réservoir (2) jusqu'au même collecteur central (3), cet acheminement étant réalisé à partir du bord supérieur (4a) d'une pluralité de collecteurs latéraux (4) qui se raccordent audit collecteur central (3), chacun desdits collecteurs (4) incluant des moyens (14, 15, 16) pour agir sur l'écoulement de fluide tombant à l'intérieur de ceux-ci, ces moyens provoquant une agitation mécanique de la surface de ladite seconde fraction de fluide pour son dégazage avant son arrivée au niveau du collecteur central (3), et
iii) aspirer et propulser lesdites première et seconde fractions de fluide vers le bas du réservoir (2), ladite aspiration permettant l'incorporation d'air atmosphérique au coeur dudit fluide.

9. Procédé selon la revendication 8, dans lequel dans l'étape ii) lesdits moyens pour agir sur l'écoulement de fluide se déversant à l'intérieur desdits collecteurs latéraux (4) comprennent les bords supérieurs (4a) desdits collecteurs latéraux (4) configurés avec une pluralité d'encoches (14) pour forcer la division de l'écoulement de fluide entrant et provoquer la formation de turbulences.

10. Procédé selon l'une quelconque des revendications 8 à 9, dans lequel à l'étape ii) lesdits moyens pour agir sur l'écoulement de fluide comprennent au moins un canal interne (15) raccordé en cascade avec le bord supérieur (4a) de chaque collecteur latéral (4), le fluide se déversant en bas de chaque collecteur latéral (4) via ledit canal (15) en provoquant la formation de turbulences.

11. Procédé selon la revendication 10, dans lequel à l'étape ii) lesdits moyens pour agir sur l'écoulement de fluide comprennent en outre un second canal interne (16) raccordé en cascade avec le premier canal interne (15), le fluide se déversant en bas du collecteur latéral (4) via lesdits premier et second canaux internes (15, 16) en provoquant la formation de turbulences.

12. Procédé selon l'une quelconque des revendications 8 à 11, dans lequel lesdits fluides à traiter sont des résidus à forte teneur organique.
